# EUROPEAN PATENT APPLICATION

(11) **EP 3 491 913 A1**
(43) Date of publication of application: **05.06.2019**
(21) Application number: 17836788.4
(22) Date of filing: 24.07.2017
(51) Int. Cl.: A01G 25/02, F04B 43/02

(54) **EMITTER AND DRIP-IRRIGATION TUBE**

(30) Priority: 01.08.2016 JP 2016151366
(71) Applicant: Enplas Corporation, Kawaguchi-shi, Saitama 332-0034 (JP)
(72) Inventor: MORIKOSHI, Daisuke, Kawaguchi-shi, Saitama 332-0034 (JP)
(74) Representative: Epping - Hermann - Fischer
(86) International application number: PCT/JP2017/026601
(87) International publication number: WO 2018/025682

(57) **Abstract**

This emitter comprises an emitter body and a resin film, and has a water intake part, a discharge part, a flow channel, and a flow rate reduction part. The water intake part takes in irrigation liquid. The discharge part discharges the irrigation liquid. The flow channel connects between the water intake part and the discharge part so as to allow the irrigation liquid to circulate therein. The flow rate reduction part reduces the flow rate of the irrigation liquid in response to a deformation of the film caused by the pressure of the irrigation liquid. At least one of the surfaces of the film includes a spiral-shaped ridge part disposed at a position corresponding to the flow rate reduction part.

## Description

### Technical Field

The present invention relates to an emitter and a drip irrigation tube including the emitter.

### Background Art

Conventionally, a drip irrigation method is known as a method for culturing plants. In the drip irrigation method, a drip irrigation tube is disposed on the soil where plants are planted, and irrigation liquid such as water and liquid fertilizer is dropped to the soil from the drip irrigation tube. The drip irrigation method is advantageous at least in that the consumption amount of the irrigation liquid can be minimized.

The drip irrigation tube includes a tube having a plurality of through holes for discharging irrigation liquid, and a plurality of emitters (also referred to as "drippers") joined on the inner wall surface of the tube and configured to discharge irrigation liquid from respective through holes (see, for example, PTL 1).

FIG. 1 is a sectional view of emitter 1 disclosed in PTL 1. Emitter 1 disclosed in PTL 1 includes emitter main body 10 and film 13 shaped integrally with emitter main body 10. Emitter main body 10 and film 13 are formed of polypropylene, for example. Emitter main body 10 includes flow rate adjustment valve 11 and flow rate control valve 12.

Flow rate adjustment valve 11 is composed of four flexible opening-closing parts. The four opening-closing parts deform in accordance with the pressure of the irrigation liquid, and then the widths of the slits between opening-closing parts change. With this configuration, flow rate adjustment valve 11 can adjust the flow rate of the irrigation liquid in emitter 1 in accordance with the pressure of the irrigation liquid.

Flow rate control valve 12 includes four opening-closing parts, and the opening-closing parts include a portion that can deform in accordance with the pressure of the irrigation liquid. By the deformation of the portion, widths of the gaps between the opening-closing parts change. With this configuration, flow rate control valve 12 can control the flow rate of the irrigation liquid in emitter 1 in accordance with the pressure of the irrigation liquid.

### Citation List

### Patent Literature

PTL 1
WO2015/050082

### Summary of Invention

### Technical Problem

In the emitter disclosed in PTL 1, when a portion (in PTL 1, the flow rate adjustment valve and the flow rate control valve) that deforms to adjust the flow rate of the irrigation liquid is deformed due to high temperature, a very long time (e.g. one day) is required for resetting it to the state before the deformation. Consequently, when the emitter disclosed in PTL 1 is used under high temperature, the performance of the emitter is changed in the period until the emitter is reset to the pre-deformation state, and the irrigation liquid cannot be quantitatively discharged for a certain time period.

An object of the present invention is to provide an emitter and a drip irrigation tube in which the emitter is not easily deformed even when used under high temperature.

### Solution to Problem

To solve the above-mentioned problems, an emitter according to the present invention is configured to be joined on an inner wall surface of a tube for distributing irrigation liquid at a position corresponding to a discharging port for communicating between inside and outside of the tube, the emitter being configured to quantitatively discharge the irrigation liquid in the tube to the outside of the tube from the discharging port, the emitter including: an emitter main body including a first surface and a second surface disposed opposite each other; a film having flexibility and including a third surface and a fourth surface disposed opposite each other, the film being made of resin, the fourth surface being joined on the first surface of the emitter main body; an intake part disposed in the first surface of the emitter main body, and configured to receive the irrigation liquid; a discharging part disposed in the second surface of the emitter main body, and configured to discharge the irrigation liquid; a channel configured to connect the intake part and the discharging part in the emitter main body and configured to distribute the irrigation liquid; and a flow rate reducing part disposed in the channel, and configured to reduce a flow rate of the irrigation liquid in accordance with deformation of the film under a pressure of the irrigation liquid in the tube. The film includes a protrusion line part having a spiral form, the protrusion line part being disposed at a position corresponding to the flow rate reducing part in the third surface or the fourth surface, or both of the third surface and the fourth surface.

To solve the above-mentioned problems, a drip irrigation tube according to the present invention includes: a tube including a discharging port for discharging irrigation liquid; and the above-mentioned emitter joined on the inner wall surface of the tube at a position corresponding to the discharging port.

### Advantageous Effects of Invention

In the emitter and the drip irrigation tube according to the present invention, the emitter is not easily deformed even when used under high temperature, and therefore irrigation liquid can be quantitatively discharged even when used under high temperature.

### Brief Description of Drawings

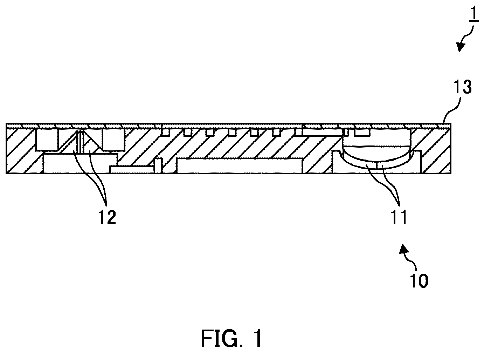

FIG. 1 is a sectional view of an emitter disclosed in PTL 1;
FIG. 2 is a sectional view of a drip irrigation tube according to an embodiment of the present invention;
FIGS. 3A to 3C illustrate a configuration of the emitter or an emitter main body according to the embodiment of the present invention;
FIG. 4 illustrates a configuration of the emitter according to the embodiment of the present invention;
FIGS. 5A and 5B illustrate a configuration of a film according to the embodiment of the present invention;
FIGS. 6A to 6C are schematic views illustrating a relationship between operations of a flow rate reducing part and a channel opening-closing part;
FIGS. 7A to 7C illustrate a configuration of a film according to modification 1 of the embodiment of the present invention; and
FIGS. 8A to 8C illustrate a configuration of a film according to modification 2 of the embodiment of the present invention.

### Description of Embodiments

An embodiment of the present invention is described below in detail with reference to the accompanying drawings.

### Configurations of drip irrigation tube and emitter

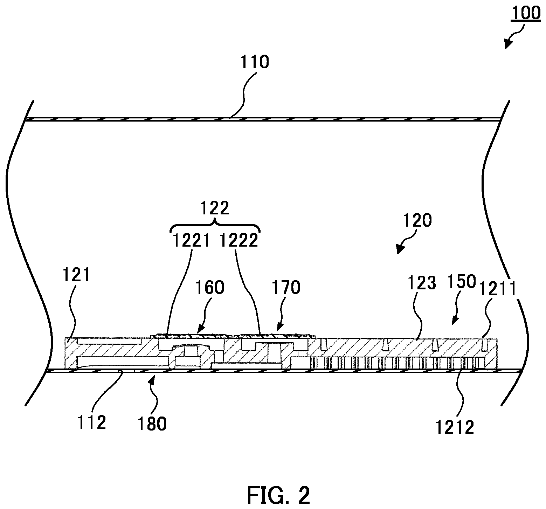

FIG. 2 is a sectional view along the axial direction of drip irrigation tube 100 according to the present embodiment. As illustrated in FIG. 2, drip irrigation tube 100 includes tube 110 and emitter 120.

Tube 110 is a pipe for carrying irrigation liquid. In the wall of tube 110, a plurality of discharging ports 112 for discharging irrigation liquid are formed at a predetermined interval (e.g. 200 to 500 mm) in the axial direction of tube 110. The diameter of the opening of discharging port 112 is not limited as long as irrigation liquid can be discharged. In the present embodiment, the diameter of the opening of discharging port 112 is 1.5 mm. Emitters 120 are joined at respective positions corresponding to discharging ports 112 on the inner wall surface of tube 110. The cross-sectional shape and the cross-sectional area of tube 110 in the direction perpendicular to the axial direction of tube 110 are not limited as long as emitter 120 can be disposed inside tube 110.

The material of tube 110 is not limited. In the present embodiment, the material of tube 110 is polyethylene.

Examples of the irrigation liquid include water, liquid fertilizer, agricultural chemicals and mixtures thereof.

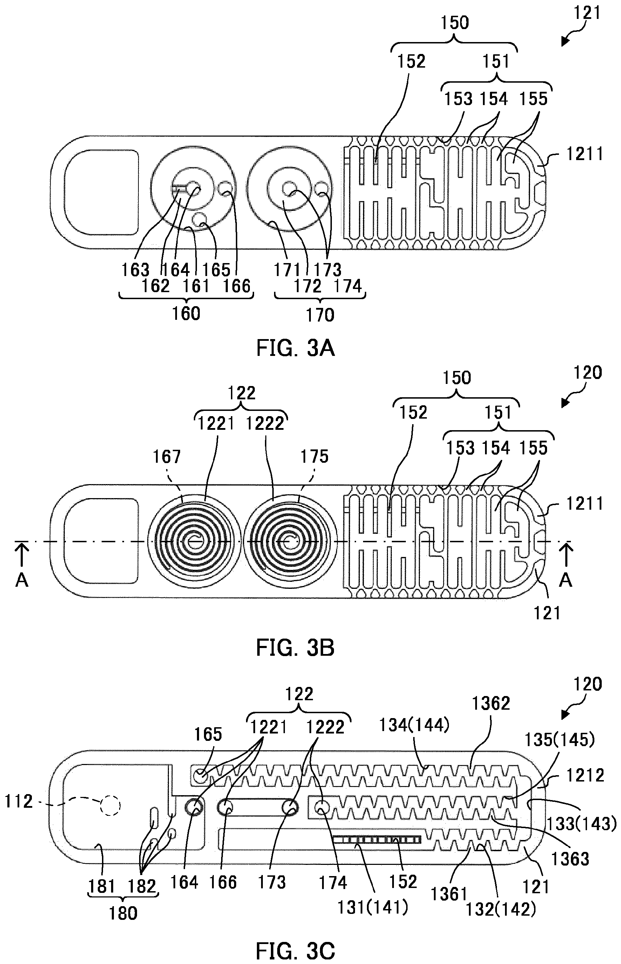

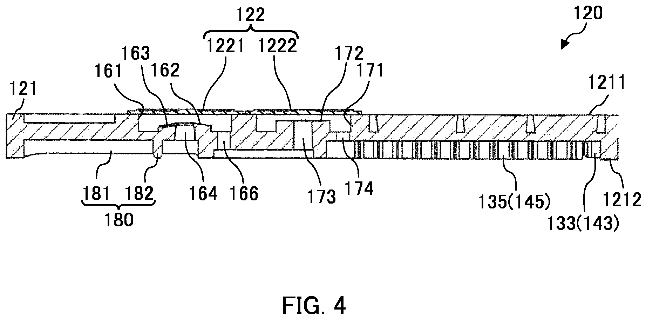

FIGS. 3A to 3C and FIG. 4 illustrate a configuration of emitter 120 or emitter main body 121 according to the present embodiment. FIG. 3A is a plan view of emitter main body 121, FIG. 3B is a plan view of emitter 120, and FIG. 3C is a bottom view of emitter 120. FIG. 4 is a sectional view taken along line A-A of FIG. 3B.

As illustrated in FIG. 2, emitter 120 is joined on the inner wall surface of tube 110 to cover discharging port 112. The shape of emitter 120 is not limited as long as emitter 120 can make intimate contact with the inner wall surface of tube 110 and can cover discharging port 112. In the present embodiment, in the cross-section of emitter 120 in the direction perpendicular to the axial direction of tube 110, the rear surface, which is joined to the inner wall surface of tube 110, of emitter 120 has a substantially arc shape protruding toward the inner wall surface of tube 110 along the inner wall surface of tube 110. In plan view, emitter 120 has a substantially rectangular shape with chamfered four corners. The size of emitter 120 is not limited. In the present embodiment, emitter 120 has a long side length of 25 mm, a short side length of 8 mm, and a height of 2.5 mm.

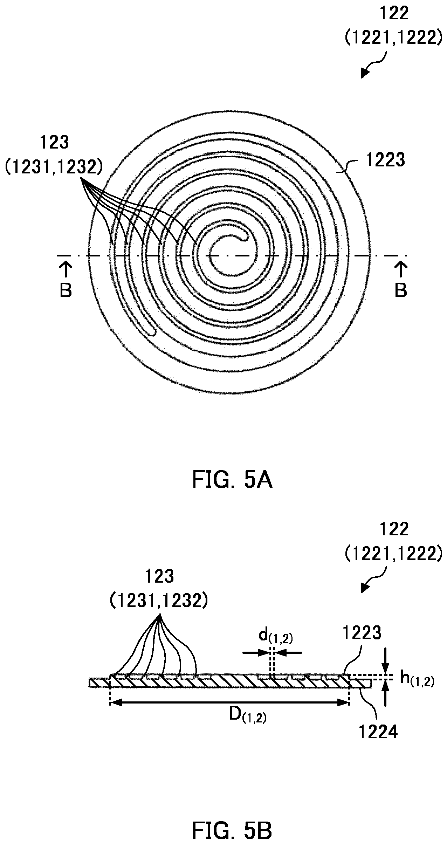

Emitter 120 includes emitter main body 121 including first surface 1211 and second surface 1212 that are opposite to each other, and film 122 including third surface 1223 and fourth surface 1224 that are opposite to each other (see FIG. 5B). Fourth surface 1224 is joined on first surface 1211 of emitter main body 121. In the present embodiment, first surface 1211 of emitter main body 121 is located on the front surface side (irrigation liquid side) of emitter 120, and second surface 1212 of emitter main body 121 is located on the rear surface side (tube 110 side) of emitter 120.

Emitter main body 121 and film 122 may be integrally formed, or may be formed as separate members. For example, emitter main body 121 and film 122 may be integrally formed with a hinge part therebetween. For example, fourth surface 1224 of film 122 can be joined on first surface 1211 of emitter main body 121 by turning film 122 about the hinge part. In the present embodiment, film 122 is joined on emitter main body 121 at a portion outside diaphragm part (described later). That is, the fourth surface of film 122 is not joined on emitter main body 121 in the diaphragm part. The method of joining emitter main body 121 and film 122 is not limited. Examples of the method of joining emitter main body 121 and film 122 include welding of the resin material of film 122, bonding with an adhesive agent, and the like. Note that the hinge part may be cut out after emitter main body 121 and film 122 are joined.

Emitter main body 121 may be formed of a material having flexibility or a material having no flexibility. Examples of the material of emitter main body 121 include resin and rubber. Examples of the resin include polyethylene and silicone. The flexibility of emitter main body 121 may be adjusted by use of an elastic resin material. Examples of the method of adjusting the flexibility of emitter main body 121 include selection of elastic resins, adjustment of the mixing ratio of an elastic resin material to a hard resin material, and the like. Emitter main body 121 may be produced by injection molding, for example.

Film 122 of emitter 120 according to the present embodiment deforms under the pressure of the irrigation liquid. The higher the temperature of film 122, the more easily film 122 deforms. Film 122 according to the present embodiment includes first film 1221 and second film 1222. First film 1221 is disposed on emitter main body 121 so as to close the opening of flow rate reducing recess 161 described later. In addition, second film 1222 is disposed on emitter main body 121 so as to close the opening of channel opening-closing recess 171 described later.

The shape and the size of film 122 may be appropriately set in accordance with the shape and the size of emitter main body 121, the shape and the size of an opening a recess (flow rate reducing recess 161 and channel opening-closing recess 171) formed in emitter main body 121 and the like. The shape and the size of first film 1221 and the shape and the size of second film 1222 may be identical to each other or different from each other. In the present embodiment, first film 1221 and second film 1222 have the same shape and the same size.

Film 122 is formed of a resin material having flexibility except for silicone. The material of film 122 may be appropriately set in accordance with the desired flexibility. Examples of the resin include polyethylene. Also, the flexibility of film 122 may be adjusted by use of an elastic resin material. Examples of the method of adjusting the flexibility of film 122 are identical to those of the method of adjusting the flexibility of emitter main body 121. The materials of first film 1221 and second film 1222 may be identical to each other or different from each other.

In addition, the thickness of film 122 may be appropriately set in accordance with the desired flexibility. The thickness of first film 1221 and the thickness of second film 1222 may be identical to each other or different from each other. In the present embodiment, first film 1221 and second film 1222 have the same thickness. Film 122 may be produced by injection molding, for example. First film 1221 and second film 1222 may be integrally formed, or may be formed as separate members. In the present embodiment, first film 1221 and second film 1222 are formed as separate members.

FIGS. 5A and 5B illustrate a configuration of film 122 (first film 1221 and second film 1222) according to the present embodiment. FIG. 5A is a plan view of film 122, and FIG. 5B is a sectional view taken along line B-B of FIG. 5A.

In the present embodiment, protrusion line part 123 is disposed in third surface 1223 of film 122. First protrusion line part 1231 is disposed in third surface 1223 of first film 1221 at a position corresponding to flow rate reducing part 160, and second protrusion line part 1232 is disposed in third surface 1223 of second film 1222 at a position corresponding to channel opening-closing part 170 (see FIG. 4 and FIGS. 5A and 5B).

In the present embodiment, first protrusion line part 1231 is a protrusion line having a spiral form and is disposed in first diaphragm part 167 described later. A portion of first protrusion line part 1231 may be a protrusion line having a shape other than the spiral form as long as a desired elasticity of first film 1221 can be ensured. For example, a portion of first protrusion line part 1231 may have a circular shape. As elaborated later, first protrusion line part 1231 increases the elasticity of first film 1221 while maintaining the ease of deflection of first film 1221.

The width d₁, the height h₁ and the number of revolutions of first protrusion line part 1231 are not limited as long as a desired elasticity of first film 1221 can be ensured. In addition, width d₁ and height h₁ of first protrusion line part 1231 may or may not be constant. In addition, the revolution direction of first protrusion line part 1231 may be clockwise or counterclockwise. In addition, the distance between first protrusion line part 1231 is not limited as long as a desired elasticity of first film 1221. Also, dimension D₁ of the region where first protrusion line part 1231 is disposed is not limited as long as a desired elasticity of first film 1221 can be ensured.

In the present embodiment, second protrusion line part 1232 is a spiral protrusion line disposed in second diaphragm part 175 described later. A portion of second protrusion line part 1232 may be a protrusion line having a shape other than the spiral form as long as a desired elasticity of second film 1222 can be ensured. For example, a portion of second protrusion line part 1232 may have a circular shape. As elaborated later, second protrusion line part 1232 increases the elasticity of second film 1222 while maintaining the ease of deflection of second film 1222.

Width d₂, height h₂ and the number of revolutions of second protrusion line part 1232 are not limited as long as a desired elasticity of second film 1222 can be ensured. In addition, width d₁ and height h₁ of first protrusion line part 1231 may or may not be constant. In addition, the revolution direction of second protrusion line part 1232 may be clockwise or counterclockwise. In addition, the distance between adjacent second protrusion line part 1232 is not limited as long as a desired elasticity of second film 1222 can be ensured. Also, dimension D₂ of the region where second protrusion line part 1232 is disposed is not limited as long as a desired elasticity of second film 1222 can be ensured.

Preferably, emitter main body 121 and film 122 are formed with one material having flexibility. Also, preferably, the diaphragm part (first diaphragm part 167 and second diaphragm part 175) described later may be integrally formed as a portion of emitter 120. In the present embodiment, emitter main body 121 and film 122 including the diaphragm part are formed as separate members with one material having flexibility.

Drip irrigation tube 100 is assembled by joining the rear surface of emitter 120 to the inner wall surface of tube 110. The method of joining tube 110 and emitter 120 is not limited. Examples of the method of joining tube 110 and emitter 120 include welding of the resin material of tube 110 or emitter 120, bonding with an adhesive agent and the like. Normally, discharging port 112 is formed after tube 110 and emitter 120 are joined; however, discharging port 112 may be formed before tube 110 and emitter 120 are joined.

Next, the components of emitter 120 are described from the viewpoint of its function. Emitter 120 includes intake part 150, first connecting channel 141, first pressure reducing channel 142, second connecting channel 143, second pressure reducing channel 144, third pressure reducing channel 145, flow rate reducing part 160, channel opening-closing part 170 and discharging part 180. Intake part 150, flow rate reducing part 160 and channel opening-closing part 170 are disposed in the front surface (first surface 1211 of emitter main body 121) of emitter 120. In addition, first connecting channel 141, first pressure reducing channel 142, second connecting channel 143, second pressure reducing channel 144, third pressure reducing channel 145 and discharging part 180 are disposed in the rear surface (second surface 1212 of emitter main body 121) of emitter 120.

At least first connecting groove 131, first pressure reducing groove 132, second connecting groove 133, second pressure reducing groove 134 and third pressure reducing groove 135 are formed in second surface 1212 of emitter main body 121. When emitter 120 and tube 110 are joined to each other, first connecting groove 131, first pressure reducing groove 132, second connecting groove 133, second pressure reducing groove 134 and third pressure reducing groove 135 function as first connecting channel 141, first pressure reducing channel 142, second connecting channel 143, second pressure reducing channel 144 and third pressure reducing channel 145, respectively.

When emitter 120 and tube 110 are joined to each other, a first channel that connects intake part 150 and discharging part 180 in emitter main body 121 is formed. The first channel is composed of intake part 150, first connecting channel 141, first pressure reducing channel 142, second connecting channel 143, second pressure reducing channel 144, flow rate reducing part 160 and discharging part 180. In addition, a second channel that connects intake part 150 and discharging part 180 in emitter main body 121 is formed. The second channel is composed of intake part 150, first connecting channel 141, first pressure reducing channel 142, second connecting channel 143, third pressure reducing channel 145, channel opening-closing part 170, channel reduction section 160 and discharging part 180. Each of the first channel and the second channel distributes irrigation liquid from intake part 150 to discharging part 180. In the present embodiment, the first channel and the second channel overlap in the region between intake part 150 and second connecting channel 143. In addition, the downstream side of channel opening-closing part 170 in the second channel is connected with flow rate reducing part 160, and the first channel and the second channel also overlap in the region between flow rate reducing part 160 and discharging part 180.

Intake part 150 takes the irrigation liquid into emitter 120. Intake part 150 is disposed in approximately one-half of first surface 1211 of emitter main body 121 (see FIGS. 3A and 3B). In first surface 1211 where intake part 150 is not disposed, flow rate reducing part 160 and channel opening-closing part 170 are disposed. Intake part 150 includes intake side screen part 151 and intake through hole 152.

Intake side screen part 151 prevents entry, into intake recess 153, of floating matters in the irrigation liquid to be taken into emitter 120. Intake side screen part 151 opens to the inside of tube 110, and includes intake recess 153, a plurality of slits 154 and a plurality of screen projection lines 155.

Intake recess 153 is a recess that is formed in the region where film 122 is not joined in first surface 1211 of emitter main body 121. The depth of intake recess 153 is not limited, and is appropriately set in accordance with the size of emitter 120. Slits 154 are formed in the outer periphery wall of intake recess 153, and screen projection lines 155 are formed on the bottom surface of intake recess 153. In addition, intake through hole 152 is formed in the bottom surface of intake recess 153.

Slits 154 connect the inner surface of intake recess 153 and the outer surface of emitter main body 121, and prevent entry, into intake recess 153, of the floating matters in the irrigation liquid while allowing the irrigation liquid to enter intake recess 153 from the side surface of emitter main body 121. The shape of slit 154 is not limited as long as the above-described function can be ensured. In the present embodiment, slit 154 is formed in a shape whose width increases from the outer surface of emitter main body 121 toward the inner surface of intake recess 153 (see FIGS. 3A and 3B). Thus, slit 154 has a so-called wedge wire structure, and therefore the pressure drop of the irrigation liquid having entered intake recess 153 is suppressed.

Screen projection lines 155 are disposed on the bottom surface of intake recess 153. The placement and the number of screen projection lines 155 are not limited as long as entry of floating matters of irrigation liquid can be prevented while allowing entry of the irrigation liquid from the opening side of intake recess 153. In the present embodiment, screen projection lines 155 are arranged such that the longitudinal axial direction of screen projection lines 155 matches the minor axial direction of emitter 120. In addition, each screen projection line 155 is formed such that the width thereof decreases from first surface 1211 of emitter main body 121 toward the bottom surface of intake recess 153. That is, in the arrangement direction of screen projection lines 155, the space between screen projection lines 155 adjacent to each other has a so-called wedge wire structure. In addition, the distance between screen projection lines 155 adjacent to each other is not limited as long as the above-described function can be ensured. Since the space between screen projection lines 155 adjacent to each other has a so-called wedge wire structure as described above, the pressure drop of the irrigation liquid having entered intake recess 153 is suppressed.

Intake through hole 152 is formed in the bottom surface of intake recess 153. The shape and the number of intake through hole 152 are not limited as long as the irrigation liquid taken into intake recess 153 can be taken into emitter main body 121. In the present embodiment, intake through hole 152 is one long hole formed along the longitudinal axial direction of emitter 120 in the bottom surface of intake recess 153. This long hole is partially covered with screen projection lines 155, and therefore, intake through hole 152 appears to be divided into a plurality of through holes when viewed from first surface 1211 side.

The irrigation liquid that has passed through the inside of tube 110 is taken into emitter main body 121 while the floating matters therein are prevented from entering intake recess 153 by intake side screen part 151.

First connecting groove 131 (first connecting channel 141) connects intake through hole 152 (intake part 150) and first pressure reducing groove 132 (first pressure reducing channel 142). First connecting groove 131 is formed in a linear shape along the longitudinal axial direction of emitter 120 at the outer edge of second surface 1212 of emitter main body 121. When tube 110 and emitter 120 are joined, first connecting groove 131 and the inner wall surface of tube 110 form first connecting channel 141. The irrigation liquid taken from intake part 150 flows to first pressure reducing channel 142 through first connecting channel 141.

First pressure reducing groove 132 (first pressure reducing channel 142) is disposed in the first channel and the second channel and connects first connecting groove 131 (first connecting channel 141) and second connecting groove 133 (second connecting channel 143). First pressure reducing groove 132 (first pressure reducing channel 142) reduces the pressure of the irrigation liquid taken from intake part 150, and guides the liquid to second connecting groove 133 (second connecting channel 143). First pressure reducing groove 132 is disposed in a linear shape along the longitudinal axial direction of emitter 120 at the outer edge of second surface 1212 of emitter main body 121. The upstream end of first pressure reducing groove 132 is connected with first connecting groove 131, and the downstream end of first pressure reducing groove 132 is connected with the upstream end of second connecting groove 133.

The shape of first pressure reducing groove 132 is not limited as long as the above-described function can be ensured. In the present embodiment, in plan view, first pressure reducing groove 132 has a zigzag shape. In first pressure reducing groove 132, first protrusions 1361, each of which has a substantially triangular prism shape and protrudes from the inner surface of first pressure reducing groove 132, are alternately disposed along the flow direction of the irrigation liquid. In plan view, first protrusions 1361 are disposed such that the tip of each first protrusion 1361 does not cross the central axis of first pressure reducing groove 132. When tube 110 and emitter 120 are joined, first pressure reducing groove 132 and the inner wall surface of tube 110 form first pressure reducing channel 142. The irrigation liquid taken from intake part 150 is guided to second connecting groove 133 (second connecting channel 143) while the pressure thereof is reduced by first pressure reducing channel 142.

Second connecting groove 133 (second connecting channel 143) connects first pressure reducing groove 132 (first pressure reducing channel 142), second pressure reducing groove 134 (second pressure reducing channel 144) and third pressure reducing groove 135 (third pressure reducing channel 145). Second connecting groove 133 is formed in a linear shape along the minor axial direction of emitter 120 at the outer edge of second surface 1212 of emitter main body 121. When tube 110 and emitter 120 are joined, second connecting groove 133 and the inner wall surface of tube 110 form second connecting channel 143. The irrigation liquid that has been taken from intake part 150 and guided to first connecting channel 141 while the pressure thereof is reduced by first pressure reducing channel 142 is guided to second pressure reducing channel 144 and third pressure reducing channel 145 through second connecting channel 143.

Second pressure reducing groove 134 (second pressure reducing channel 144) is disposed upstream of flow rate reducing part 160 in the first channel, and connects second connecting groove 133 (second connecting channel 143) and flow rate reducing part 160. Second pressure reducing groove 134 (second pressure reducing channel 144) guides, to flow rate reducing part 160, the irrigation liquid coming from second connecting groove 133 (second connecting channel 143) while reducing the pressure of the liquid. Second pressure reducing groove 134 is disposed along the longitudinal axial direction of emitter 120 at the outer edge of second surface 1212 of emitter main body 121. The upstream end of second pressure reducing groove 134 is connected with the downstream end of second connecting groove 133, and the downstream end of second pressure reducing groove 134 is connected with first connecting through hole 165 communicated with flow rate reducing part 160.

The shape of second pressure reducing groove 134 is not limited as long as the above-described function can be ensured. In the present embodiment, in plan view, second pressure reducing groove 134 has a zigzag shape as with the shape of first pressure reducing groove 132. In second pressure reducing groove 134, second protrusions 1362, each of which protrudes from the inner surface of second pressure reducing groove 134 and has a substantially triangular prism shape, are alternately disposed along the flow direction of the irrigation liquid. In plan view, second protrusions 1362 are disposed such that the tip of each second protrusion 1362 does not cross the central axis of second pressure reducing groove 134. When tube 110 and emitter 120 are joined, second pressure reducing groove 134 and the inner wall surface of tube 110 form second pressure reducing channel 144. In the present embodiment, second pressure reducing groove 134 (second pressure reducing channel 144) is longer than third pressure reducing groove 135 (third pressure reducing channel 145) described later. Accordingly, the pressure of the irrigation liquid flowing through second pressure reducing groove 134 (second pressure reducing channel 144) is reduced more than the irrigation liquid flowing through third pressure reducing groove 135 (third pressure reducing channel 145). Apart of the irrigation liquid that has been taken from intake part 150 while the pressure thereof being reduced is guided to flow rate reducing part 160 while the pressure thereof is reduced by second pressure reducing channel 144.

Third pressure reducing groove 135 (third pressure reducing channel 145) is disposed upstream of flow rate reducing part 160 and channel opening-closing part 170 in the second channel, and connects second connecting groove 133 (second connecting channel 143) and channel opening-closing part 170. Third pressure reducing groove 135 (third pressure reducing channel 145) guides, to channel opening-closing part 170, the irrigation liquid coming from second connecting groove 133 (second connecting channel 143) while reducing the pressure of the liquid. Third pressure reducing groove 135 is disposed along the longitudinal axial direction of emitter 120 at a center portion of second surface 1212 of emitter main body 121. The upstream end of third pressure reducing groove 135 is connected with the downstream end of second connecting channel 143, and the downstream end of third pressure reducing groove 135 is connected with third connecting through hole 174 communicated with channel opening-closing part 170.

The shape of third pressure reducing groove 135 is not limited as long as the above-described function can be ensured. In the present embodiment, in plan view, third pressure reducing groove 135 has a zigzag shape as with the shape of first pressure reducing groove 132. In third pressure reducing groove 135, third protrusions 1363, each of which has a substantially triangular prism shape and protrudes from the inner surface of third pressure reducing groove 135, are alternately disposed along the flow direction of the irrigation liquid. In plan view, third protrusions 1363 are disposed such that the tip of each third protrusion 1363 does not cross the central axis of third pressure reducing groove 135. When tube 110 and emitter 120 are joined, third pressure reducing groove 135 and the inner wall surface of tube 110 form third pressure reducing channel 145. Another part of the irrigation liquid that has taken from intake part 150 while the pressure thereof is reduced by first pressure reducing channel 142 is guided to channel opening-closing part 170 while the pressure thereof is reduced by third pressure reducing channel 145. As elaborated later, the second channel operates only when the pressure of the irrigation liquid is low.

In the first channel and the second channel, flow rate reducing part 160 is disposed downstream of first pressure reducing channel 142, second pressure reducing channel 144 and third pressure reducing channel 145 on the front surface side of emitter 120. Flow rate reducing part 160 sends the irrigation liquid to discharging part 180 while reducing the flow rate of the irrigation liquid in accordance with the deformation of film 122 under the pressure of the irrigation liquid in tube 110.

The configuration of flow rate reducing part 160 is not limited as long as the above-described function can be ensured. In the present embodiment, flow rate reducing part 160 includes flow rate reducing recess 161, first valve seat part 162, communication groove 163, flow rate reducing through hole 164 communicated with discharging part 180, first connecting through hole 165 communicated with second pressure reducing groove 134 (second pressure reducing channel 144), second connecting through hole 166 communicated with channel opening-closing through hole 173 of channel opening-closing part 170, and first diaphragm part 167 that is a portion of first film 1221. At the inner surface of flow rate reducing recess 161, flow rate reducing through hole 164 communicated with discharging part 180, first connecting through hole 165 communicated with second pressure reducing groove 134 (second pressure reducing channel 144), and second connecting through hole 166 communicated with channel opening-closing through hole 173 of channel opening-closing part 170 open.

Flow rate reducing recess 161 is disposed in first surface 1211 of emitter main body 121. In plan view, flow rate reducing recess 161 has a substantially circular shape. In the bottom surface of flow rate reducing recess 161, flow rate reducing through hole 164 communicated with discharging part 180, first connecting through hole 165 communicated with second pressure reducing groove 134 (second pressure reducing channel 144), and second connecting through hole 166 communicated with channel opening-closing part 170, and first valve seat part 162 are disposed. The depth of flow rate reducing recess 161 is not limited as long as the depth of flow rate reducing recess 161 is equal to or greater than the depth of communication groove 163.

Flow rate reducing through hole 164 is disposed at a center portion of the bottom surface of flow rate reducing recess 161, and is communicated with discharging part 180. In the bottom surface of flow rate reducing recess 161, first valve seat part 162 is disposed to surround flow rate reducing through hole 164 such that first valve seat part 162 is opposite to first diaphragm part 167 and is separated from first diaphragm part 167. First valve seat part 162 is formed such that first valve seat part 162 can make intimate contact with first diaphragm part 167 when the pressure of the irrigation liquid flowing through tube 110 is a predetermined value (second pressure described later) or greater. When first diaphragm part 167 makes contact with first valve seat part 162, the flow rate of the irrigation liquid flowing from flow rate reducing recess 161 into discharging part 180 is reduced.

The shape of first valve seat part 162 is not limited as long as the above-described function can be ensured. In the present embodiment, first valve seat part 162 is a protrusion having a cylindrical shape. In the present embodiment, the height of the end surface of the protrusion from the bottom surface of flow rate reducing recess 161 decreases from the inner side toward the outer side.

Communication groove 163, which communicates between the inside of flow rate reducing recess 161 and flow rate reducing through hole 164 surrounded by flow rate reducing recess 161, is formed in a portion of the surface of first valve seat part 162 where first diaphragm part 167 can make intimate contact with first valve seat part 162. First connecting through hole 165 communicated with second pressure reducing groove 134 (second pressure reducing channel 144) and second connecting through hole 166 communicated with channel opening-closing through hole 173 of channel opening-closing part 170 are formed in the region where first valve seat part 162 is not disposed in the bottom surface of flow rate reducing recess 161. Note that first connecting through hole 165 communicated with second pressure reducing groove 134 (second pressure reducing channel 144) may be disposed so as to be surrounded by first valve seat part 162, and flow rate reducing through hole 164 communicated with discharging part 180 may be disposed outside first valve seat part 162.

First diaphragm part 167 is a portion of first film 1221 including first protrusion line part 1231. First diaphragm part 167 is disposed in such a manner as to close the communication between the inside of flow rate reducing recess 161 and the inside of tube 110, and to close the opening of flow rate reducing recess 161. First diaphragm part 167 has flexibility, and deforms in such a manner as to make contact with first valve seat part 162 in accordance with the pressure of the irrigation liquid in tube 110. For example, first diaphragm part 167 is distorted to flow rate reducing recess 161 side when the pressure of the irrigation liquid flowing in tube 110 is greater than a predetermined value. Specifically, first diaphragm part 167 deforms toward first valve seat part 162 as the pressure of the irrigation liquid increases, and finally makes contact with first valve seat part 162. Even when first diaphragm part 167 is in intimate contact with first valve seat part 162, neither of first connecting through hole 165, flow rate reducing through hole 164 nor communication groove 163 is closed by first diaphragm part 167, and therefore the irrigation liquid sent from first connecting through hole 165 can be sent to discharging part 180 through communication groove 163 and flow rate reducing through hole 164. Note that first diaphragm part 167 is disposed next to second diaphragm part 175 described later.

Channel opening-closing part 170 is disposed between third pressure reducing channel 145 (third pressure reducing groove 135) and discharging part 180 in the second channel on the front surface side of emitter 120. Channel opening-closing part 170 opens the second channel in accordance with the pressure in tube 110, and sends the irrigation liquid to discharging part 180. In the present embodiment, channel opening-closing part 170 is connected with flow rate reducing part 160 through channel opening-closing through hole 173 and second connecting through hole 166, and the irrigation liquid from third pressure reducing channel 145 (third pressure reducing groove 135) reaches discharging part 180 through channel opening-closing part 170 and flow rate reducing part 160.

The configuration of channel opening-closing part 170 is not limited as long as the above-described function can be ensured. In the present embodiment, channel opening-closing part 170 includes channel opening-closing recess 171, second valve seat part 172, channel opening-closing through hole 173 communicated with second connecting through hole 166 of flow rate reducing part 160, third connecting through hole 174 communicated with third pressure reducing channel 145 (third pressure reducing groove 135), and second diaphragm part 175 that is a portion of second film 1222. At the inner surface of channel opening-closing recess 171, third connecting through hole 174 communicated with third pressure reducing channel 145 (third pressure reducing groove 135), and channel opening-closing through hole 173 communicated with flow rate reducing part 160 open. In addition, channel opening-closing recess 171 is communicated with flow rate reducing recess 161 of flow rate reducing part 160.

In plan view, channel opening-closing recess 171 has a substantially circular shape. In the bottom surface of channel opening-closing recess 171, third connecting through hole 174 connected with third pressure reducing groove 135, channel opening-closing through hole 173 communicated with flow rate reducing part 160, and second valve seat part 172 are disposed. The valve seat surface of second valve seat part 172 is disposed on first surface 1211 side of emitter main body 121 (the front surface side of emitter 120) relative to the valve seat surface of first valve seat part 162. That is, second valve seat part 172 is higher than first valve seat part 162. With this configuration, when film 122 (first film 1221 and second film 1222) deforms under the pressure of the irrigation liquid, second film 1222 makes contact with second valve seat part 172 before first film 1221 makes contact with first valve seat part 162.

Third connecting through hole 174 communicated with third pressure reducing groove 135 is disposed in the region where second valve seat part 172 is not disposed in the bottom surface of channel opening-closing recess 171. Second valve seat part 172 is disposed on the bottom surface of channel opening-closing recess 171 to surround channel opening-closing through hole 173. In addition, second valve seat part 172 is disposed to face second diaphragm part 175 without making contact with second diaphragm part 175, and is formed such that second diaphragm part 175 can make intimate contact with second valve seat part 172 when the pressure of the irrigation liquid flowing through tube 110 is a predetermined value (first pressure described later) or greater. When the pressure of the irrigation liquid flowing through tube 110 is the first pressure or greater, second diaphragm part 175 makes intimate contact with second valve seat part 172 to close channel opening-closing through hole 173, and as a result, the second channel is closed. The shape of second valve seat part 172 is not limited as long as the above-described function can be ensured. In the present embodiment, second valve seat part 172 is an annular-shaped protrusion disposed to surround channel opening-closing through hole 173.

Second diaphragm part 175 is a portion of second film 1222 including second protrusion line part 1232, and is disposed next to first diaphragm part 167 (first film 1221). Second diaphragm part 175 is disposed in such a manner as to prevent the communication between the inside of channel opening-closing recess 171 and the inside of tube 110 and to close the opening of channel opening-closing recess 171. Second diaphragm part 175 has flexibility, and deforms in such a manner as to make contact with second valve seat part 172 in accordance with the pressure of the irrigation liquid in tube 110. For example, second diaphragm part 175 is distorted to channel opening-closing recess 171 side when the pressure of the irrigation liquid flowing in tube 110 is greater than a predetermined value. To be more specific, second diaphragm part 175 deforms toward second valve seat part 172 as the pressure of the irrigation liquid increases, and, when the pressure of the irrigation liquid becomes the first pressure, makes contact with second valve seat part 172. In this manner, the second channel (channel opening-closing through hole 173) is closed.

Discharging part 180 discharges the irrigation liquid out of emitter 120. Discharging part 180 is disposed opposite discharging port 112 on second surface 1212 side of emitter main body 121. Discharging part 180 sends, to discharging port 112 of tube 110, the irrigation liquid coming from flow rate reducing through hole 164. With this configuration, discharging part 180 can discharge the irrigation liquid out of emitter 120. The configuration of discharging part 180 is not limited as long as the above-described function can be ensured. In the present embodiment, discharging part 180 includes discharging recess 181 and entry preventing part 182.

Discharging recess 181 is disposed on second surface 1212 side of emitter main body 121. In plan view, discharging recess 181 has a substantially rectangular shape. In the bottom surface of discharging recess 181, flow rate reducing through hole 164 and entry preventing part 182 are disposed.

Entry preventing part 182 prevents entry of foreign matters from discharging port 112. Entry preventing part 182 is not limited as long as the above-described function can be ensured. In the present embodiment, entry preventing part 182 is four protrusions disposed next to each other. The four protrusions are disposed such that the four protrusions are located between flow rate reducing through hole 164 and discharging port 112 when emitter 120 is joined to tube 110.

### Operation of drip irrigation tube

Next, an operation of drip irrigation tube 100 is described.

First, irrigation liquid is fed into tube 110. Preferably, the pressure of the irrigation liquid that is fed to drip irrigation tube 100 is 0.1 MPa or lower in view of simply implementing the drip irrigation method, or preventing damaging of tube 110 and emitter 120. The irrigation liquid in tube 110 is taken into emitter 120 from intake part 150. To be more specific, the irrigation liquid in tube 110 enters intake recess 153 from the gap between slits 154, or the gap between screen projection lines 155 and passes through intake through hole 152. At this time, the floating matters in the irrigation liquid can be removed since intake part 150 includes intake side screen part 151 (the gaps between slits 154 and screen projection lines 155). In addition, the pressure drop of the irrigation liquid having entered intake part 150 is suppressed since a so-called wedge wire structure is formed in intake part 150.

The irrigation liquid taken from intake part 150 reaches first connecting channel 141. The irrigation liquid having reached first connecting channel 141 reaches second connecting channel 143 through first pressure reducing channel 142. The irrigation liquid having reached second connecting channel 143 flows into second pressure reducing channel 144 and third pressure reducing channel 145. At this time, the irrigation liquid first advances through third pressure reducing channel 145 that causes smaller pressure drop and has a shorter channel length in comparison with second pressure reducing channel 144. The irrigation liquid having entered third pressure reducing channel 145 flows into channel opening-closing part 170 through third connecting through hole 174.

The irrigation liquid having entered channel opening-closing part 170 flows into flow rate reducing part 160 through channel opening-closing through hole 173 and second connecting through hole 166. Next, the irrigation liquid having entered flow rate reducing part 160 flows into discharging part 180 through flow rate reducing through hole 164. Finally, the irrigation liquid having entered discharging part 180 is discharged out of tube 110 from discharging port 112 of tube 110.

On the other hand, the irrigation liquid having entered second pressure reducing channel 144 flows into flow rate reducing part 160 through first connecting through hole 165. The irrigation liquid having entered flow rate reducing part 160 flows into discharging part 180 through flow rate reducing through hole 164. The irrigation liquid having entered discharging part 180 is discharged out of tube 110 from discharging port 112 of tube 110.

### Operations of flow rate reducing part and channel opening-closing part

Now, operations of flow rate reducing part 160 and channel opening-closing part 170 in accordance with the pressure of the irrigation liquid in tube 110 is described.

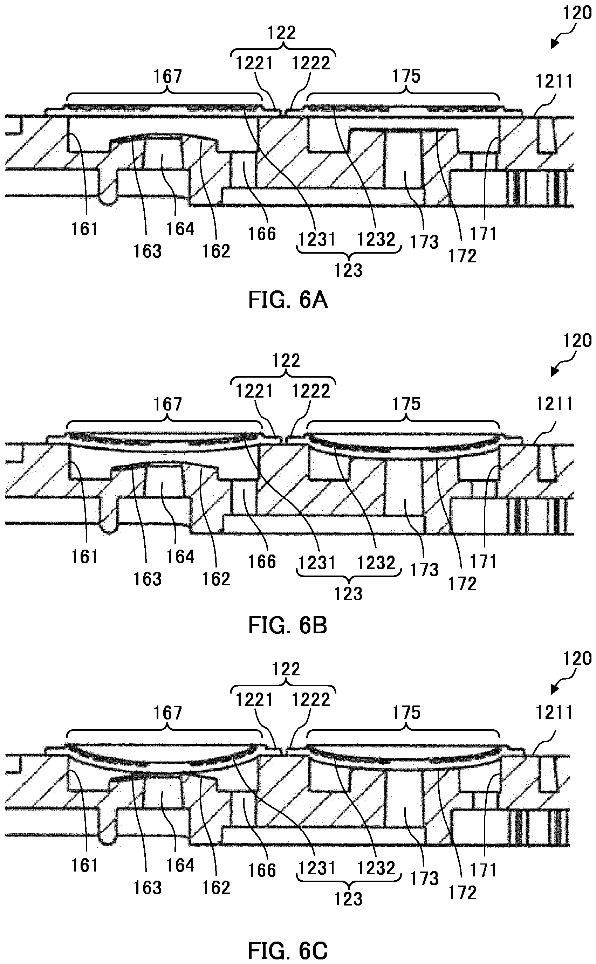

FIGS. 6A to 6C are schematic views illustrating an operational relationship between flow rate reducing part 160 and channel opening-closing part 170. It is to be noted that FIGS. 6A to 6C are schematic cross-sectional views along line A-A of FIG. 3B. FIG. 6A is a sectional view of a state where no irrigation liquid is fed to tube 110, FIG. 6B is a sectional view of a state where the pressure of the irrigation liquid in tube 110 is a first pressure, and FIG. 6C is a sectional view of a state where the pressure of the irrigation liquid in tube 110 is a second pressure greater than the first pressure.

Channel opening-closing part 170 and flow rate reducing part 160 are communicated with each other through channel opening-closing through hole 173 and second connecting through hole 166. In addition, in flow rate reducing part 160, first diaphragm part 167 deforms in accordance with the pressure of the irrigation liquid in tube 110, whereby the flow rate of the irrigation liquid is controlled. In channel opening-closing part 170, second diaphragm part 175 deforms in accordance with the pressure of the irrigation liquid in tube 110, whereby the flow rate of the irrigation liquid is controlled.

In a state before the irrigation liquid is fed into tube 110, no pressure of the irrigation liquid is applied to film 122, and therefore neither first diaphragm part 167 nor second diaphragm part 175 deforms (see FIG. 6A).

When feeding of irrigation liquid into tube 110 is started, deformation of first diaphragm part 167 and second diaphragm part 175 is started. In this state, second diaphragm part 175 is not in intimate contact with second valve seat part 172, and accordingly the irrigation liquid taken from intake part 150 is discharged out of tube 110 from discharging port 112 through both the first channel (first connecting channel 141, first pressure reducing channel 142, second connecting channel 143, second pressure reducing channel 144, flow rate reducing part 160 and discharging part 180) and the second channel (first connecting channel 141, first pressure reducing channel 142, second connecting channel 143, third pressure reducing channel 145, channel opening-closing part 170, flow rate reducing part 160 and discharging part 180). In this manner, when feeding of the irrigation liquid to tube 110 is started, and/or when the pressure of the irrigation liquid in tube 110 is lower than a predetermined pressure, the irrigation liquid taken from intake part 150 is discharged through both the first channel and the second channel.

When the pressure of the irrigation liquid in tube 110 increases, first diaphragm part 167 and second diaphragm part 175 further deform. Then, second diaphragm part 175 makes contact with second valve seat part 172 and closes the second channel (see FIG. 6B). At this time, since the valve seat surface of second valve seat part 172 is disposed on first surface 1211 side (the front surface side of emitter 120) relative to the valve seat surface of first valve seat part 162, second diaphragm part 175 makes contact with second valve seat part 172 before first diaphragm part 167 makes contact with first valve seat part 162. At this time, first diaphragm part 167 is not in contact with first valve seat part 162. In this manner, when the pressure of the irrigation liquid in tube 110 is so increased as to deform film 122, second diaphragm part 175 comes closer to second valve seat part 172, and accordingly the amount of the irrigation liquid that is discharged through the second channel decreases. Then, when the pressure of the irrigation liquid in tube 110 becomes the first pressure, the irrigation liquid in the second channel is not discharged from discharging port 112. As a result, the irrigation liquid taken from intake part 150 is discharged out of tube 110 from discharging port 112 through only the first channel.

When the pressure of the irrigation liquid in tube 110 further increases, first diaphragm part 167 further deforms toward first valve seat part 162. In a normal configuration, the amount of the irrigation liquid that flows through the first channel increases as the pressure of the irrigation liquid increases; however, in emitter 120 according to the present embodiment, excessive increase in the amount of the liquid that flows through the first channel irrigation is prevented by reducing the distance between first diaphragm part 167 and first valve seat part 162 while the pressure of the irrigation liquid is reduced by first pressure reducing channel 142 and second pressure reducing channel 144. When the pressure of the irrigation liquid in tube 110 is equal to or greater than the second pressure, which is greater than the first pressure, first diaphragm part 167 makes contact with first valve seat part 162 (see FIG. 6C). Even in this state, neither of first connecting through hole 165, flow rate reducing through hole 164 nor communication groove 163 is closed by first diaphragm part 167, and accordingly the irrigation liquid taken from intake part 150 is discharged out of tube 110 from discharging port 112 through communication groove 163. In this manner, in flow rate reducing part 160, when the pressure of the irrigation liquid in tube 110 is equal to or greater than the second pressure, first diaphragm part 167 makes contact with first valve seat part 162, and thus increase of the amount of the irrigation liquid that flows through the first channel is suppressed.

Thus, flow rate reducing part 160 and channel opening-closing part 170 function to compensate the respective flow rates in accordance with deformation of second film 1222 under the pressure of the irrigation liquid in tube 110. As a result, drip irrigation tube 100 according to the present embodiment can discharge a certain amount of irrigation liquid out of tube 110 regardless of whether the pressure of the irrigation liquid is low or high.

### Function of protrusion line part

Now a function of protrusion line part 123 in film 122 is described. An emitter including a film provided with no protrusion line part 123 (hereinafter referred to also as "comparison emitter") is also described for comparison.

Also in the comparison emitter, the film deforms to flow rate reducing recess 161 side and channel opening-closing recess 171 side in accordance with the pressure of the irrigation liquid in tube 110. In the case where the film is made of resin, when irrigation liquid having a high temperature is introduced into the emitter, the temperature of the film exceeds a predetermined value, and the pressure of the irrigation liquid in tube 110 exceeds a predetermined value, deformation of the film that is kept for a long span (hereinafter referred to also as simply "long-span elastic deformation") is caused. The time taken for resetting film 122 deformed by the long-span elastic deformation to the state before the deformation is, for example, one day. In this manner, when the film is deformed due to the use in a high temperature state, the deformed shape is held over a long period of time. Consequently, the film distorted by the long-span elastic deformation cannot be reset to the original pre-deformation shape for a certain time period, and the distance between first diaphragm part 167 and first valve seat part 162, and the distance between second diaphragm part 175 and second valve seat part 172 are reduced. As a result, the flow rate of the irrigation liquid that flows into flow rate reducing part 160 from channel opening-closing part 170 and the flow rate of the irrigation liquid that flows into discharging part 180 from flow rate reducing part 160 are reduced. Accordingly, the flow rate of the irrigation liquid that flows into discharging part 180 and is discharged out of tube 110 from discharging port 112 of tube 110 is reduced and becomes insufficient.

In contrast, film 122 of emitter 120 according to the present embodiment includes protrusion line part 123 having a spiral form. The thickness of a portion of film 122 where protrusion line part 123 is not disposed is equal to that of the film of the comparison emitter, whereas a portion of film 122 where protrusion line part 123 is disposed is greater than that of the film of the comparison emitter. With this configuration, protrusion line part 123 can increase the elasticity of film 122 while maintaining the ease of deflection of the film 122. When film 122 deforms to the recess (flow rate reducing recess 161 and channel opening-closing recess 171) side, an elastic force of moving film 122 back to the plane where film 122 has been located before the deformation acts on film 122. As a result, distortion of film 122 due to the long-span elastic deformation is suppressed even when the irrigation liquid having high temperature is introduced into the emitter, the temperature of film 122 exceeds the predetermined value, and the pressure of the irrigation liquid in tube 110 exceeds the predetermined value.

### Effect

As described above, emitter 120 according to the present embodiment includes film 122 in which protrusion line part 123 having a spiral form is disposed on third surface 1223. Protrusion line part 123 can increase the elasticity of film 122 while maintaining ease of deflection of film 122. Thus, drip irrigation tube 100 according to the present embodiment causes less deformation resulting from the long-span elastic deformation of film 122, and as a result, irrigation liquid can be quantitatively discharged even under high temperature.

In addition, it is conceivable to increase the thickness of the diaphragm part (first diaphragm part 176 and second diaphragm part 175) for the purpose of suppressing reduction of the flow rate of the irrigation liquid due to the long-span elastic deformation of film 122. If the thickness of the diaphragm part is increased, however, the thickness of emitter 120 is increased, thus resulting in the pressure drop of the irrigation liquid in tube 110. In addition, the deformation of the diaphragm part is suppressed and the cross-sectional area of the channel is reduced, thus resulting in clogging. In contrast, emitter 120 according to the present embodiment can suppress reduction of the flow rate of the irrigation liquid due to the long-span elastic deformation of film 122 without increasing the entire thickness of film 122, and therefore does not cause the above-mentioned problems.

### Modification

Note that, in the present embodiment, emitter 120 includes film 122 in which protrusion line part 123 is disposed in third surface 1223, the emitter according to the present invention is not limited to this configuration. For example, the emitter according to the present invention may include film 122' according to modification 1 or film 122" according to modification 2.

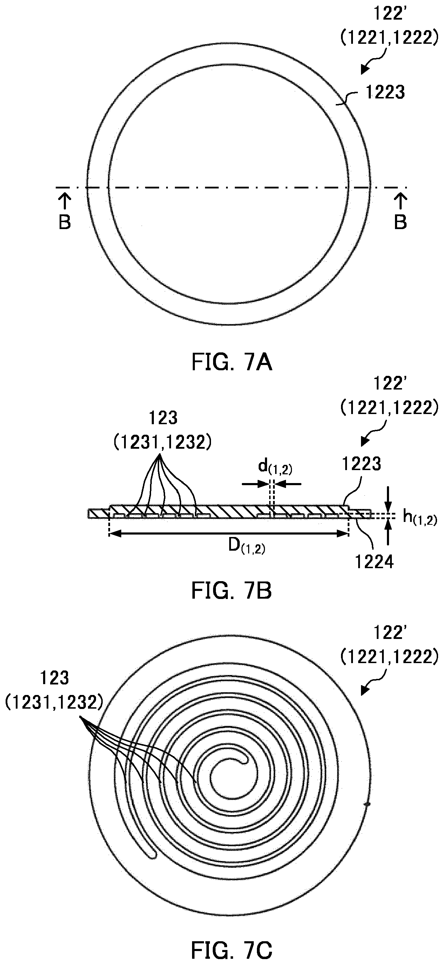

FIGS. 7A to 7C illustrate a configuration of film 122' according to modification 1. FIG. 7A is a plan view of film 122' according to modification 1, FIG. 7B is a sectional view taken along line B-B of FIG. 7A, and FIG. 7C is a bottom view of film 122' according to modification 1. As illustrated in FIGS. 7A to 7C, protrusion line part 123 may be disposed in fourth surface 1224 of film 122'.

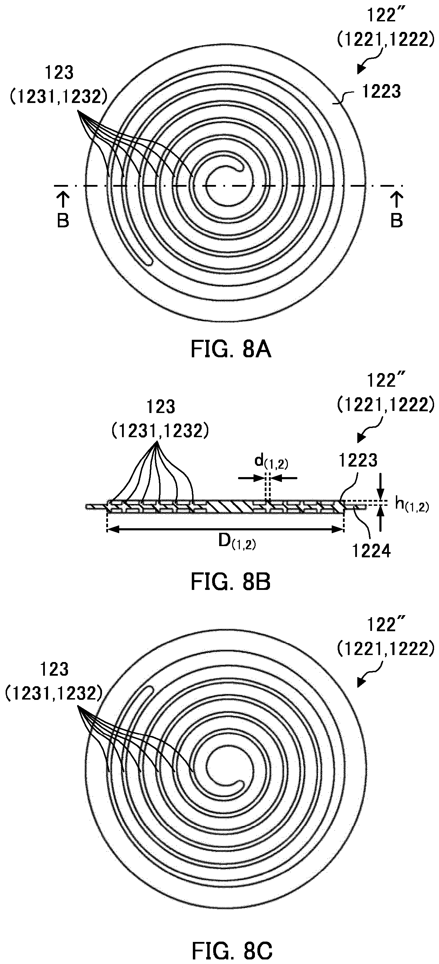

FIGS. 8A to 8C illustrate a configuration of film 122" according to modification 2. FIG. 8A is a plan view of film 122" according to modification 2, FIG. 8B is a sectional view taken along line B-B of FIG. 8A, and FIG. 8C is a bottom view of film 122" according to modification 2. As illustrated in FIGS. 8A to 8C, protrusion line part 123 may be disposed on both third surface 1223 and fourth surface 1224 of film 122".

In addition, the configurations of the emitter and the drip irrigation tube according to the present invention are not limited to those of emitter 120 and drip irrigation tube 100 according to the embodiment. For example, the emitter may not be provided with first pressure reducing channel 142, second pressure reducing channel 144, third pressure reducing channel 145 and channel opening-closing part 170.

In addition, while first connecting channel 141, first pressure reducing channel 142, second connecting channel 143, second pressure reducing channel 144 and third pressure reducing channel 145 are configured to be formed when emitter 120 and tube 110 are joined in the present embodiment, first connecting channel 141, first pressure reducing channel 142, second connecting channel 143, second pressure reducing channel 144 and third pressure reducing channel 145 may be formed in advance as channels in emitter 120.

In addition, while the contact timing of deformed film 122 is adjusted by the difference in heights of first valve seat part 162 and second valve seat part 172 in the present embodiment, the heights of first valve seat part 162 and second valve seat part 172 may be equal to each other. In this case, the contact timing of deformed film 122 may be adjusted by setting different thicknesses and/o by using different materials (materials having different elasticities) between first diaphragm part 167 and second diaphragm part 175. In this case, the contact timing of deformed film 122 may be adjusted by changing the thicknesses and materials (elasticities) of first diaphragm part 167 and second diaphragm part 175, and the height and the width of protrusion line part 123.

This application is entitled to and claims the benefit of Japanese Patent Application No. 2016-151366 filed on August 1, 2016, the disclosure each of which including the specification, drawings and abstract is incorporated herein by reference in its entirety.

### Industrial Applicability

According to the present invention, it is possible to easily provide an emitter that can drop liquid with an appropriate rate even when used under high temperature. Accordingly, popularization of the emitter in the technical fields of drip irrigations and endurance tests where long-term dropping is required, and development in the technical fields can be expected.

### Reference Signs List

1 Emitter
10 Emitter main body
11 Flow rate adjustment valve
12 Flow rate control valve
13 Film
100 Drip irrigation tube
110 Tube
112 Discharging port
120 Emitter
121 Emitter main body
1211 First surface
1212 Second surface
122, 122', 122" film
1221 First film
1222 Second film
1223 Third surface
1224 Fourth surface
123 Protrusion line part
1231 First protrusion line part
1232 Second protrusion line part
131 First connecting groove
132 First pressure reducing groove
133 Second connecting groove
134 Second pressure reducing groove
135 Third pressure reducing groove
1361 First protrusion
1362 Second protrusion
1363 Third protrusion
141 First connecting channel
142 First pressure reducing channel
143 Second connecting channel
144 Second pressure reducing channel
145 Third pressure reducing channel
150 Intake part
151 Intake side screen part
152 Intake through hole
153 Intake recess
154 Slit
155 Screen protrusion line part
160 Flow rate reducing part
161 Flow rate reducing recess
162 First valve seat part
163 Communication groove
164 Flow rate reducing through hole
165 First connecting through hole
166 Second connecting through hole
167 First diaphragm part
170 Channel opening-closing part
171 Channel opening-closing recess
172 Second valve seat part
173 Channel opening-closing through hole
174 Third connecting through hole
175 Second diaphragm part
180 Discharging part
181 Discharging recess
182 Entry preventing part

## Claims

1. An emitter configured to be joined on an inner wall surface of a tube for distributing irrigation liquid at a position corresponding to a discharging port for communicating between inside and outside of the tube, the emitter being configured to quantitatively discharge the irrigation liquid in the tube to the outside of the tube from the discharging port, the emitter comprising:
an emitter main body including a first surface and a second surface disposed opposite each other;
a film having flexibility and including a third surface and a fourth surface disposed opposite each other, the film being made of resin, the fourth surface being joined on the first surface of the emitter main body;
an intake part disposed in the first surface of the emitter main body, and configured to receive the irrigation liquid;
a discharging part disposed in the second surface of the emitter main body, and configured to discharge the irrigation liquid;
a channel configured to connect the intake part and the discharging part in the emitter main body and configured to distribute the irrigation liquid; and
a flow rate reducing part disposed in the channel, and configured to reduce a flow rate of the irrigation liquid in accordance with deformation of the film under a pressure of the irrigation liquid in the tube,
wherein the film includes a protrusion line part having a spiral form, the protrusion line part being disposed at a position corresponding to the flow rate reducing part in the third surface or the fourth surface, or both of the third surface and the fourth surface.

2. The emitter according to claim 1, wherein the flow rate reducing part includes:
a recess disposed in the first surface of the emitter main body;
a diaphragm part having flexibility that is a portion of the film, and is disposed to close an opening of the recess, the diaphragm part being configured to be distorted in a direction of the recess when the pressure of the irrigation liquid in the tube exceeds a predetermined value;
a first through hole opening at an inner surface of the recess, and communicated with one of the discharging part and the channel;
a second through hole opening at the inner surface of the recess, and communicated with the other of the discharging part and the channel;
a valve seat part disposed opposite the diaphragm part to surround the first through hole or the second through hole without making contact with the diaphragm part, wherein the valve seat part is allowed to make intimate contact with the diaphragm part when the pressure of the irrigation liquid in the tube is greater than the predetermined value; and
a communication groove formed in a surface of the valve seat part where the diaphragm part is allowed to make intimate contact with the valve seat part, the communication groove being configured to communicate between the inside of the recess and the first through hole or the second through hole surrounded by the valve seat part,
wherein the protrusion line part is disposed in the diaphragm part.

3. The emitter according to claim 2,
wherein the emitter is formed of one material having flexibility; and
wherein the diaphragm part is integrally formed as a portion of the emitter.

4. A drip irrigation tube comprising:
a tube including a discharging port for discharging irrigation liquid; and
the emitter according to any one of claims 1 to 3 that is joined on the inner wall surface of the tube at a position corresponding to the discharging port.
